# EUROPÄISCHE PATENTANMELDUNG

(11) **EP 0 890 392 A1**
(43) Veröffentlichungstag der Anmeldung: **13.01.1999**
(21) Anmeldenummer: 98112522.2
(22) Anmeldetag: 07.07.1998
(51) Int. Cl.: B05B 12/14, F23J 15/00

(54) **Verfahren und Vorrichtung für den Betrieb einer Düsenanordnung**

(30) Priorität: 10.07.1997 AT 1184/97
(71) Anmelder: VOEST-ALPINE INDUSTRIEANLAGENBAU GMBH, 4020 Linz (AT)
(72) Erfinder: Lanzerstorfer, Christof, Dipl.-Ing. Dr., 4600 Wels (AT); Baumgartner, Reinhold, 4050 Traun (AT)
(74) Vertreter: Rieberer, Stefan, Dipl.-Ing.

(57) **Zusammenfassung**

Verfahren zum Betreiben einer Anordnung von einer oder mehreren Düsen (2,3) oder Düsengruppen, wobei jeder Düse (2,3) oder Düsengruppe ein flüssiges Medium über Zuleitungen (5) zugeführt wird, und das flüssige Medium in einen Gasraum (1) zur Kühlung dieses Gases verdüst wird und wobei die Flüssigkeitszuleitung (5a,6) jeder Düse oder Düsengruppe durch ein Absperrventil (7,8) absperrbar ist. Bei Außerbetriebnahme einer Düse (2,3) oder Düsengruppe wird die zwischen Absperrventil (7,8) und Düse (2,3) oder Düsengruppe in der Flüssigkeitszuleitung (5a,6) verbleibende Flüssigkeit entgegen der normalen Strömungsrichtung der Flüssigkeit entfernt

## Beschreibung

Die Erfindung betrifft ein Verfahren zum Betreiben einer Anordnung von einer oder mehreren Düsen oder Düsengruppen, wobei jeder Düse oder Düsengruppe ein flüssiges Medium über Zuleitungen zugeführt wird, und das flüssige Medium in einen Gasraum zur Kühlung dieses Gases verdüst wird und wobei die Flüssigkeitszuleitung jeder Düse durch ein Absperrventil absperrbar ist.

Die Düsen können Einstoffdüsen, beispielsweise Hochdruckflüssigkeitsdüsen, oder Zweistoffdüsen sein, wobei bei letzteren jeder Düse ein gasförmiges Medium, beispielsweise Luft, Stickstoff oder Wasserdampf, und ein flüssiges Medium, beispielsweise Wasser, über gesonderte Zuleitungen zugeführt wird.

Es ist bekannt, mehrere Düsen zu einer Düsengruppe zusammenzufassen. Alle Düsen einer solchen Gruppe weisen jeweils eine gemeinsame Zuleitung für Flüssigkeit, sowie, im Falle von Zweistoffdüsen, eine gemeinsame Gaszuleitung auf.

Solchermaßen betriebene Düsen finden beispielsweise bei der Kühlung von Stahlbrammen, oder aber auch bei der Einspritzkühlung von Gasströmen Verwendung, wie sie beispielsweise beim Frischen von Stahl in einem Stahlkonverter als Konverterabgase anfallen.

Bei der Einspritzkühlung von Gasströmen sind üblicherweise mehrere, beispielsweise drei, Düsen oder Düsengruppen in einem Gaskanal angeordnet und in Serie geschaltet. Je nach der Fahrweise des Gaserzeugers, also beispielsweise des Stahlkonverters, kann es zur Einhaltung einer bestimmten gewünschten Abgastemperatur erforderlich sein, eine jeweils unterschiedliche Anzahl der Düsen, gegebenenfalls auch keine, gleichzeitig zu betreiben.

Da sich die Fahrweise des Gaserzeugers und damit die Geschwindigkeit und Temperatur des Abgasstromes innerhalb weniger Minuten immer wieder ändern kann, ist es sehr oft erforderlich, einzelne der Düsen oder Düsengruppen zu- oder abzuschalten.

Die von den Düsen erzeugten Tröpfchen sollen möglichst Klein sein, um eine große Kühlwirkung zu erzielen. Größere Tropfen sind unerwünscht, weil diese aufgrund des ungünstigeren Verhältnisses von Oberfläche zu Volumen schlechter verdampfen und die Kühlwirkung geringer ist. Bei größeren Tropfen ist auch nicht sichergestellt, daß sie vor Erreichen der Wandung des Gaskanals verdampfen. Die dadurch auftretenden lokalen Temperaturschwankungen können zu Spannungen, Materialermüdung und Rissen in der Wandung des Gaskanals führen. Weiters lagert sich an den immer wieder kurzzeitig feuchten Wandstellen Staub aus dem zu kühlenden Gas an und bildet Anbackungen, die bei längerer Betriebszeit letztlich zu einer Verringerung des Querschnitts des Gaskanals führen und periodisch auf aufwendige Weise entfernt werden müssen.

Beim Abstellen von Düsen tritt das Problem auf, daß entweder die in der Düsenlanze verbleibende Flüssigkeit (üblicherweise Wasser mit einer Konzentration von festen, gelösten Stoffen von etwa 0,1 g/Liter) ausrinnt (große, schlecht verdampfende Tropfen), wenn die Lanze waagrecht oder in Richtung der Düse abwärts geneigt ist, oder andererseits, wenn die Lanze in Richtung der Düse ansteigt, wird zwar das Auslaufen von Flüssigkeit verhindert, aufgrund der nach wie vor hohen Umgebungstemperaturen verdampft aber das in der Zuleitung verbleibende Wasser und es bilden sich Beläge ("Kalk") aus den im Wasser gelösten Stoffen.

Diese Beläge können entweder die Lanze verlegen, oder, verursacht durch Temperaturspannungen, losbrechen bzw. abbröckeln und in der Folge die Düse verlegen.

Im Fall von Zweistoffdüsen ist es bekannt, das Verlegen von Düse und Düsenlanze dadurch zu verhindern, daß die in der Lanze nach dem Abstellen der Gas- und Flüssigkeitszufuhr verbleibende Flüssigkeit mittels eines Gasstoßes in der Flüssigkeitszuleitung durch die Düse ausgeblasen wird.

Dadurch wird zwar die Ausbildung von Belägen in der Lanze verhindert, die Flüssigkeit wird aber nicht mehr versprüht, sondern als Pfropfen ausgeblasen, wodurch sich große, schlecht verdampfende Tropfen bilden. Darüber hinaus soll aber die Gasversorgung der anderen, noch in Betrieb befindlichen Düsen oder Düsengruppen aufrecht erhalten bleiben. Da aber nach dem Ausblasen des Flüssigkeitspfropfens der Gaswiderstand in der abgestellten Düse plötzlich wegfällt und weil die für das Ausblasen verwendete Gasleitung mit den Gaszuleitungen der anderen Düsen leitungsmäßig kommuniziert, bricht die Gasversorgung bei den anderen, noch in Betrieb befindlichen Düsen kurzzeitig zusammen. Eine Verschlechterung der Sprüh- und damit der Kühlleistung ist die Folge.

Zum Verhindern des Verlegens von Düse und Düsenlanze ist es weiters bekannt, nach dem Abstellen der Flüssigkeitszufuhr die Gaszuleitung noch offen zu halten und einen Teil des Gasstroms dazu zu benutzen, die in der Lanze nach dem Abstellen der Flüssigkeitszufuhr verbleibende Flüssigkeit durch die Düse auszublasen.

Dadurch wird dieser Flüssigkeitsrest weiterhin verdüst und es bilden sich keine großen, schlecht verdampfende Tropfen. Nachdem der Flüssigkeitsrest ausgeblasen wurde, bricht aber auch bei dieser Variante die Gasversorgung bei den anderen, noch in Betrieb befindlichen Düsen kurzzeitig zusammen.

Die Aufgabe der Erfindung ist es demnach, ein Verfahren zur Verbesserung der Betriebsweise einer Anordnung von Düsen oder Düsengruppen zu schaffen, bei dem die angeführten Probleme der bekannten Verfahren vermieden werden. Insbesondere soll bei der Außerbetriebnahme einzelner der Düsen oder Düsengruppen die Bildung von Belägen in den Düsen und Düsenlanzen verhindert, das Ausrinnen von Flüssigkeit aus den Flüssigkeitszuleitungen abgestellter Düsen vermieden und im Fall von Zweistoffdüsen die ununterbrochene, kontinuierliche Gasversorgung der noch in Betrieb befindlichen Düsen sichergestellt werden.

Die Lösung dieser Aufgabe ist erfindungsgemäß dadurch gekennzeichnet, daß bei Außerbetriebnahme einer Düse oder Düsengruppe die zwischen Absperrventil und Düse in der Flüssigkeitszuleitung verbleibende Flüssigkeit entgegen der normalen Strömungsrichtung der Flüssigkeit entfernt wird.

Gegenstand der Erfindung sind sowohl das erfindungsgemäße Verfahren, als auch Vorrichtungen zur Durchführung des Verfahrens.

Diese Aufgabe wird vorteilhalterweise dadurch gelöst, daß die in der Flüssigkeitszuleitung zwischen Absperrventil und Düse verbleibende Flüssigkeit über eine Ableitung entfernt wird, die zwischen Absperrventil und Düse nach dem Absperrventil von der Flüssigkeitszuleitung abzweigt und durch ein Ventil versperrbar ist. Bei geeigneter Anordnung der Düsenlanze, d.h. nach oben zur Düse hin ansteigend, bzw. wenn der Ort des Austritts der Flüssigkeit aus der flüssigkeitsgefüllten Ableitung tiefer liegt als die Düse, ist bereits gewährleistet, daß die in der Flüssigkeitszuleitung verbleibende Flüssigkeit alleine aufgrund der Wirkung der Schwerkraft abfließen kann.

Bei Zweistoffdüsen mit innerer Mischung unterstützt das unmittelbar nach dem Abstellen der Düse noch in der Gaszuleitung befindliche Gas das Abfließen der Flüssigkeit noch zusätzlich, indem es die Flüssigkeit rückwärts, also entgegen der normalen Strömungsrichtung der Flüssigkeit durch die Flüssigkeitszuleitung und die davon abzweigende Ableitung ausbläst.

Zweistoffdüsen werden üblicherweise mit beim jeweiligen Einsatzfall leicht verfügbaren Gasen und Flüssigkeiten betrieben. Als Gas, das üblicherweise komprimiert ist, wird bevorzugterweise Luft, Stickstoff oder Wasserdampf verwendet.

Die Flüssigkeit ist bevorzugterweise Wasser, und zwar gewöhnliches Gebrauchswasser mit einer Konzentration an gelösten festen Stoffen von beispielsweise etwa 0,1 g/Liter. Dieser Wert kann aber aufgrund geographisch lokal unterschiedlicher Wasserhärten erheblich schwanken.

Die Außerbetriebnahme einer Düse oder Düsengruppe wird vorteilhalterweise durchgeführt, indem die Flüssigkeitszuleitung geschlossen und zeitgleich oder unmittelbar danach die Flüssigkeitsableitung geöffnet wird. Dadurch kann die in der Flüssigkeitszuleitung zwischen Absperrventil und Düse verbleibende Flüssigkeit alleine aufgrund der Schwerkraft abfließen.

Vorteilhafterweise wird die Außerbetriebnahme einer Zweistoffdüse oder Zweistoffdüsengruppe durchgeführt, indem gleichzeitig die Flüssigkeits- und die Gaszuleitung geschlossen werden und zeitgleich oder unmittelbar danach die Flüssigkeitsableitung geöffnet wird. Indem beide Zuleitungen gleichzeitig geschlossen werden ist sichergestellt, daß der an der abgestellten Düse plötzlich auftretende Druckabfall nicht für die anderen Düsen des Systems spürbar wird. Würde die Flüssigkeitszuleitung zuerst geschlossen, so würde sich der Gasdurchsatz durch die abgestellte Düse plötzlich um ein Vielfaches erhöhen und die Gasversorgung der noch in Betrieb befindlichen Düsen kurzzeitig, d.h. bis zum Schließen der Gaszuleitung der abgestellten Düse, zusammenbrechen. Wenn im umgekehrten Fall die Gaszufuhr zuerst abgestellt wird, hat auch das einen Druckabfall an der abgestellten Düse zur Folge, der über das Flüssigkeitsleitungssystem für die anderen noch in Betrieb befindlichen Düsen spürbar wird. Die Flüssigkeit wird an der abgestellten Düse überhaupt nicht mehr versprüht und nach dem Absperren der Flüssigkeitszuleitung ist in der Gaszuleitung kein Gas mehr gespeichert, welches das Entfernen der Flüssigkeit unterstützen könnte.

Vorteilhafterweise kommuniziert die Gaszuleitung mit einem Druckgasspeicherbehälter, welcher nach dem Abstellen der Gaszuleitung durch das während des Normalbetriebes in seinem Inneren gespeicherte Gas das Ausblasen der Flüssigkeit noch unterstützt.

Ein weiteres vorteilhaftes Verfahrensmerkmal besteht darin, daß die Gaszuleitung nach der Außerbetriebnahme der Zweistoffdüse ständig mit einer geringen Menge an Gas gespült wird. Dadurch wird verhindert, daß Staub aus dem heißen Gas aus dem Gaskanal in die Düse eindringt und diese verschmutzt.

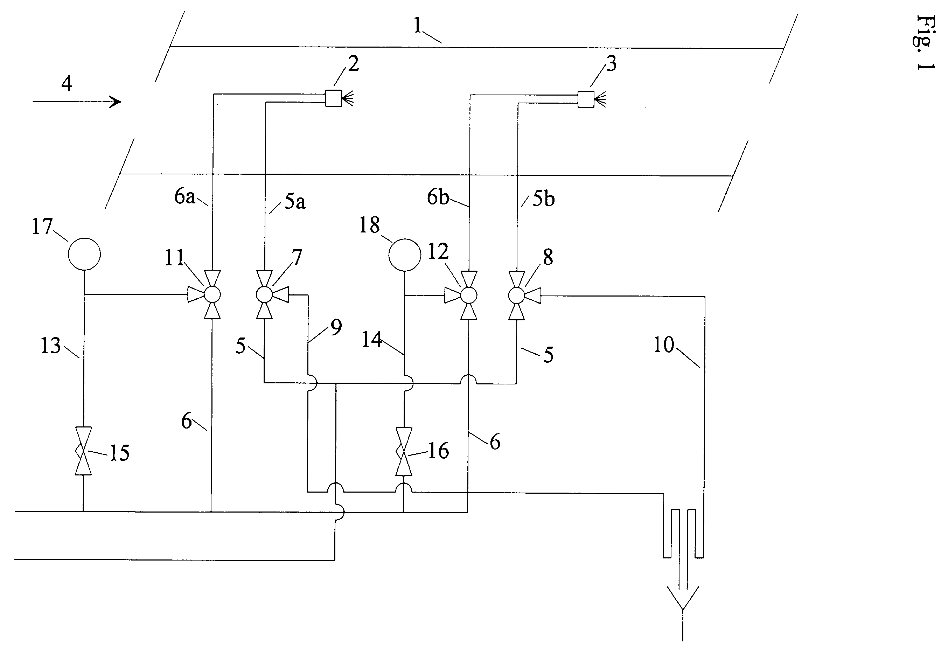

Im folgenden wird das erfindungsgemäße Verfahren durch das in der Zeichnung Fig. 1 dargestellte Ausführungsbeispiel zur Durchführung des Verfahrens näher erläutert.

Fig. 1 zeigt schematisch eine Anordnung von zwei Zweistoffdüsen oder Zweistoffdüsengruppen mit ihrer Gas- und Flüssigkeitsversorgung.

In Fig. 1 sind in einem Gaskanal 1 Zweistoffdüsen 2,3 in kaskadierter Schaltung angeordnet. Die Zweistoffdüsen 2,3 können dabei jeweils aus einer einzelnen Düse bestehen oder aus einer Gruppe von beispielsweise drei Düsen. Die Strömungsrichtung des zu kühlenden heißen Abgases ist durch Pfeil 4 angedeutet. Den Düsen 2,3 wird über eine Leitung 5 Flüssigkeit zugeführt. Das Gas, mit dem die Flüssigkeit verdüst wird, wird den Düsen 2,3 über Leitung 6 zugeführt. Die Ventile 7 und 8 sind als Mehrwegventile ausgebildet und sind bei Betrieb beider Zweistoffdüsen 2,3 so geschaltet, daß die Flüssigkeit von Leitung 5 in Leitung 5a zur Düse 2, bzw. von Leitung 5 in Leitung 5b zur Düse 3 fließen kann. Bei Normalbetrieb sind die Ventile 7 und 8 außerdem so geschaltet, daß keine Flüssigkeit durch die Ableitungen 9 und 10 abfließen kann. Die Ventile 11 und 12 sind ebenfalls als Mehrwegventile ausgebildet und bei Normalbetrieb beider Zweistoffdüsen 2,3 so geschaltet, daß die Gasleitungen 6 und 6a, bzw. 6 und 6b offen verbunden sind, nicht aber die von den Ventilen 11 und 12 von der Gaszuleitung 6 abzweigenden Leitungen 13 und 14. In den Leitungen 13 und 14, in welchen nur ein durch Drosseln 15 und 16 gering gehaltener Gasstrom fließen kann, befinden sich Druckgasspeicherbehälter 17 und 18. Diese kommunizieren bei Normalbetrieb bei entsprechend reduziertem Druck mit der Gaszuleitung 6.

Wenn nun die Abgastemperatur soweit absinkt, daß eine der beiden Düsen 2,3 zur Kühlung des Abgases auf die gewünschte Temperatur ausreicht, wird die zweite Düse 3 abgeschaltet. Dazu wird Ventil 8 geschaltet, und zwar so, daß der Flüssigkeitsstrom von 5 nach 5b unterbunden ist und die Flüssigkeit über Ableitung 10 abfließen kann. Ventil 12 wird gleichzeitig mit Ventil 8 so geschaltet, daß der Gasstrom von 6 nach 6b unterbunden ist und der Druckgasspeicherbehälter 18 nunmehr nach 6b offen ist. Das im Druckgasspeicherbehälter 18 gespeicherte Gas drückt gemeinsam mit dem noch in Leitung 6b verbliebenen Gas über Düse 3 die in Leitung 5b verbliebene Flüssigkeit rückwärts, also entgegen der normalen Strömungsrichtung, über Leitung 10 hinaus. In dieser Stellung von Ventil 12 ist auch die Verbindung von Leitung 14 nach Leitung 6b offen. Dadurch kann ein durch Drossel 16 gering gehaltener Gasstrom die Gaszuleitung 6b, sowie Düse 3 spülen und verhindert dadurch das Eindringen von Staub aus dem Abgasstrom in Düse 3.

Selbstverständlich können mehr als nur zwei Düsen oder Düsengruppen in kaskadierter Schaltung angeordnet sein. Durch die erfindungsgemäße Vorrichtung kann jede der Düsen oder Düsengruppen nach dem erfindungsgemäßen Verfahren gesondert zu- oder abgeschaltet werden.

## Patentansprüche

1. Verfahren zum Betreiben einer Anordnung von einer oder mehreren Düsen oder Düsengruppen, wobei jeder Düse oder Düsengruppe ein flüssiges Medium über Zuleitungen zugeführt wird, und das flüssige Medium in einen Gasraum zur Kühlung dieses Gases verdüst wird und wobei die Flüssigkeitszuleitung jeder Düse oder Düsengruppe durch ein Absperrventil absperrbar ist, **dadurch gekennzeichnet, daß** bei Außerbetriebnahme einer Düse oder Düsengruppe die zwischen Absperrventil und Düse oder Düsengruppe in der Flüssigkeitszuleitung verbleibende Flüssigkeit entgegen der normalen Strömungsrichtung der Flüssigkeit entfernt wird.

2. Verfahren nach Anspruch 1, **dadurch gekennzeichnet, daß** die in der Flüssigkeitszuleitung zwischen Absperrventil und Düse verbleibende Flüssigkeit über eine Ableitung entfernt wird, die zwischen Absperrventil und Düse von der Flüssigkeitszuleitung abzweigt und durch ein Ventil versperrbar ist.

3. Verfahren nach einem der Ansprüche 1 oder 2, **dadurch gekennzeichnet, daß** die in der Flüssigkeitszuleitung zwischen Absperrventil und Düse verbleibende Flüssigkeit über eine Ableitung entfernt wird, die vom als Mehrwegventil ausgeführten Absperrventil abzweigt.

4. Verfahren nach einem der Ansprüche 1-3, **dadurch gekennzeichnet, daß** die Düsen Zweistoffdüsen sind, wobei jeder der Zweistoffdüsen oder Zweistoffdüsengruppen außer des flüssigen Mediums auch ein gasförmiges Medium über Zuleitungen zugeführt wird und das flüssige Medium mit Hilfe des gasförmigen Mediums verdüst wird und wobei die Gaszuleitung durch ein Ventil absperrbar ist.

5. Verfahren nach einem der Ansprüche 1-4, **dadurch gekennzeichnet, daß** das verwendete Gas komprimierter Stickstoff, komprimierte Luft oder komprimierter Wasserdampf ist und daß die verwendete Flüssigkeit Wasser ist.

6. Verfahren nach einem der Ansprüche 1-5, **dadurch gekennzeichnet, daß** bei der Außerbetriebnahme einer Zweistoffdüse oder Zweistoffdüsengruppe die Flüssigkeits- und die Gaszuleitung gleichzeitig geschlossen werden und zeitgleich oder unmittelbar danach die Flüssigkeitsableitung geöffnet wird.

7. Verfahren nach einem der Ansprüche 1-6, **dadurch gekennzeichnet, daß** zeitgleich mit oder unmittelbar nach dem Schließen der Gaszuleitung ein Druckgasspeicherbehälter in die Gaszuleitung zwischen Gasabsperrventil und Zweistoffdüse entleert wird, wobei die Zweistoffdüsen solche mit innerer Mischung sind und der dabei in der Düse entstehende Überdruck das Entfernen der Flüssigkeit entgegen ihrer normalen Strömungsrichtung unterstützt.

8. Verfahren nach einem der Ansprüche 1 bis 7, **dadurch gekennzeichnet, daß** nach der Außerbetriebnahme einer Zweistoffdüse oder Zweistoffdüsengruppe die Gaszuleitung ständig mit einer geringen Menge an Gas gespült wird.

9. Vorrichtung, enthaltend zumindest eine Düse (2,3), oder zumindest eine Gruppe von Düsen (2,3), mit Flüssigkeitszuleitungen (5,5a)(5,5b) zu jeder Düse oder -gruppe (2,3), wobei jede Flüssigkeitszuleitung (5,5a)(5,5b) durch ein Ventil (7,8) absperrbar ist, **dadurch gekennzeichnet, daß** von jeder Flüssigkeitszuleitung (5,5a)(5,5b) von dem oder in Strömungsrichtung nach dem Absperrventil (7,8) eine absperrbare Ableitung (9,10) abzweigt.

10. Vorrichtung nach Anspruch 9, **dadurch gekennzeichnet, daß** das Ventil (7,8) in jeder Flüssigkeitszuleitung (5,5a)(5,5b) ein Mehrwegventil ist, von welchem die Ableitung (9,10) abzweigt.

11. Vorrichtung nach einem der Ansprüche 9 oder 10, **dadurch gekennzeichnet, daß** die Düsen (2,3) Zweistoffdüsen sind, mit Gaszuleitungen (6,6a)(6,6b) zu jeder Zweistoffdüse oder -gruppe (2,3), wobei jede Gaszuleitung (6,6a)(6,6b) durch ein Ventil (11,12) absperrbar ist

12. Vorrichtung nach Anspruch 11, **dadurch gekennzeichnet, daß** ein Druckgasspeicherbehälter (17,18) mit jeder Gaszuleitung (6a,6b) leitungsmäßig verbunden ist, wobei die Zweistoffdüsen solche mit innerer Mischung sind.
